(19) Europäisches Patentamt
European Patent Office
Office européen des brevets

(11) Publication number: 0 386 916 A1

(12) **EUROPEAN PATENT APPLICATION**

(21) Application number: 90302030.3

(22) Date of filing: 26.02.90

(51) Int. Cl.[5]: C08K 13/02, C08L 67/02, //(C08K13/02,3:00,5:02,5:523)

(30) Priority: 27.02.89 JP 45971/89

(43) Date of publication of application: 12.09.90 Bulletin 90/37

(84) Designated Contracting States: AT BE CH DE DK ES FR GB GR IT LI LU NL SE

(71) Applicant: POLYPLASTICS CO. LTD.
3-13, Azuchicho, 2-chome
Chuo-Ku Osaka-shi Osaka(JP)

(72) Inventor: Fukasawa, Jun
324 Miyashita
Fuji-shi, Shizuoka(JP)
Inventor: Kogima, Matsushi
3355-13, Obuchi
Fuji-shi, Shizuoka(JP)
Inventor: Kurita, Hayato
294-25, Koizumi
Fujinomiya-shi, Shizuoka(JP)

(74) Representative: Jackson, Peter et al
HYDE, HEIDE & O'DONNELL 10-12 Priests Bridge
London SW15 5JE(GB)

(54) **Flame-retardant polyester resin composition.**

(57) A flame-retardant polyester resin composition having improved impact resistance and tenacity comprises (A) a thermoplastic polyester resin, (B) an organic halogenated flame retardant, (C) an inorganic filler and (D) a phosphoric ester of the following formula:

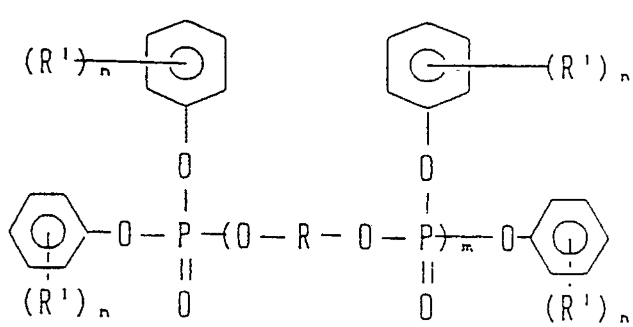

in which formula R represents a divalent organic group, $R^1$ represents the same or different groups selected from $C_1$ to $C_{20}$ aliphatic groups, $C_3$ to $C_{13}$ alicyclic groups and $C_6$ to $C_{18}$ aromatic groups, m represents a number of 1 to 30 and n represents an integer of 0 to 3, and the weight proportions, based on the composition, of the components (B), (C) and (D) are respectively 1 to 30 %, 5 to 60 % and 0.5 to 20 %.

EP 0 386 916 A1

# FLAME-RETARDANT POLYESTER RESIN COMPOSITION

The present invention relates to a flame-retardant polyester resin composition.

More particularly, the present invention relates to a resin composition having an impact resistance and tenacity improved without impairing its excellent mechanical properties, electrical properties and flame retardancy.

Thermoplastic polyester resins such as polyalkylene terephthalate resins are widely used as engineering plastics in virtue of their excellent mechanical properties, electrical properties and moldability. However, since they are flammable, they are made flame-retardant, usually with an organic halogenated flame retardant and a flame-retarding assistant, when they are used as a starting material for electric components etc. Further a reinforcing filler such as glass fiber is incorporated in resin compositions for use in fields wherein high mechanical strength and rigidity are necessitated. Similarly, a composition containing talc or clay in combination with the flame retardant is used in fields requiring excellent electrical characteristics such as arc resistance and tracking resistance. When such a flame retardant or filler is incorporated in the polyester resin, however its mechanical characteristics such as impact resistance and tenacity are usually impaired, so that when it is used as the starting material for electric components (for example connectors or timer cases), problems such as breakdown tend to occur during molding, assembling or use of the components. Improvements in the impact resistance and tenacity have therefore been keenly sought.

A process has been proposed for improving the impact resistance, etc. of a polyester resin by incorporating an impact resistance improver such as an elastomer. However, the improvement achieved by such an additive is unsatisfactory in that it is usually accompanied by reduction of the rigidity, thermal resistance and electrical properties of the composition.

After intensive investigations, the present inventors have found that addition of a particular compound is effective in improving the impact resistance and tenacity of a flame-retardant reinforced polyester resin composition containing an organic halogenated flame retardant and a filler, without impairing its excellent mechanical and electrical properties, thermal resistance and flame retardancy. The present invention has been completed on the basis of this finding.

Thus the present invention provides a flame-retardant polyester resin composition comprising:

(A) a thermoplastic polyester resin,

(B) 1 to 30 wt. % (based on the composition) of an organic halogenated flame retardant,

(C) 5 to 60 wt. % (based on the composition) of an inorganic filler, and

(D) 0.5 to 20 wt. % (based on the composition) of a phosphoric ester of the following formula (1):

(1) :

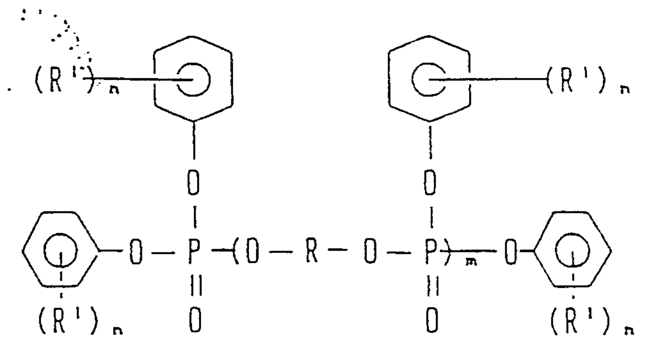

... (1)

wherein R represents a divalent organic group, $R^1$ represents the same or different groups selected from $C_1$ to $C_{20}$ aliphatic groups, $C_3$ to $C_{13}$ alicyclic groups and $C_6$ to $C_{18}$ aromatic groups, m represents a number of 1 to 30 and n represents an integer of 0 to 3.

The composition according to claim 1 comprises 25 to 93.5 wt. % of the thermoplastic polyester resin (A). The proportions of the other components are selected from the ranges defined above to give the total of 100%.

The thermoplastic polyester (A) used in the present invention is a polyester produced by polycondensation of a dicarboxylic acid with a dihydroxy compound, polycondensation of a hydroxycarboxylic acid or polycondensation of these three compounds. The effect of the present invention can be obtained not only when the polyester is a homopolyester but also when it is a copolyester.

The dicarboxylic acids usable herein include, for example, known dicarboxylic acids such as terephthalic acid, isophthalic acid, napthalenedicarboxylic acid, diphenyldicarboxylic acid, diphenyl ether dicarboxylic acid, diphenylethanedicarboxylic acid, cyclohexanedicarboxylic acid, adipic acid and sebacic acid as well as these compounds substituted with an alkyl, alkoxy or halogen. Further these dicarboxylic acids are usable in the form of an ester-forming derivative thereof such as a lower alcohol ester, e.g. dimethyl ester. The polyesters of the present invention as described above are used either singly or in combination of two or more of them.

Examples of the dihydroxy compounds constituting the polyesters of the present invention include ethylene glycol, propylene glycol, butanediol, neopentyl glycol, hydroquinone, resorcinol, dihydroxyphenyl, napthalenediol, dihydroxydiphenyl ether, cyclohexanediol, 2,2-bis(4-hydroxyphenyl)-propane and diethoxybisphenol A, and polyoyxalkylene glycols as well as these compounds substituted with an alkyl, alkoxy or halogen. They are used either singly or in combination of two or more of them.

The hydroxycarboxylic acids include, for example, hydroxybenzoic acid, hydroxynaphthoic acid and diphenyleneoxycarboxylic acid as well as these compounds substituted with an alkyl, alkoxy or halogen. Ester-forming derivatives of these compounds are also usable. In the present invention, they are used either singly or in combination of two or more of them.

In addition, polyesters having a branched or crosslinked structure produced by using also a small amount of a trifunctional monomer such as trimellitic acid, trimesic acid, pyromellitic acid, pentaerythritol or trimethylolpropane are also usable.

Any of the thermoplastic polyesters produced by polycondensation of the above-described compounds as the monomer components can be used as the component (A) of the present invention. They are used either singly or in the form of a mixture of two or more of them. Polyalkylene terephthalates and in particular polybutylene terephthalate and copolymers mainly comprising polybutylene terephthalate are preferred.

The organic halogenated flame retardant (B) to be incorporated in the thermoplastic polyester resin (A) of the present invention may be any of organic halogenated compounds usually used as the flame retardant for thermoplastic polyesters. Among them, aromatic brominated compounds are preferred. They include, for example, low-molecular brominated compounds such as hexa- to decabrominated diphenyl ethers, low-molecular organic halogenated compounds derived from tetrabromobisphenol A, halogenated polycarbonates (such as polycarbonate oligomers produced from brominated bisphenol A), halogenated epoxy compounds (such as diepoxy compounds produced by reacting a brominated bisphenol A with epichlorohydrin and monoepoxy compounds produced by reacting a brominated phenol with epichlorohydrin), brominated polystyrene and brominated bisimides (such as lower alkylenebistetrabromophthalimide).

The effect of the present invention can be obtained with any of the above-described flame retardants. A brominated epoxy flame retardant or brominated bisimide flame retardant is preferred in that each of these give excellent thermal stability and moldability (high cycle moldability, freedom from mold corrosion, etc.) in the extrusion molding process. Their beneficial effect is particularly remarkable in electric components, particularly those having a metallic contact.

The organic halogenated flame retardants can be used either singly or in the form of a mixture of two or more of them.

The amount of the organic halogenated flame retardant (B) is preferably as small as possible, since the mechanical properties of the composition are impaired when it is large. Usually it is 1 to 30 wt. %, particularly preferably 2 to 20 wt. %, based on the whole composition. The flame retardant is preferably used in combination with a flame retardant assistant.

Suitable flame retardant assistants for use in the present invention include metal oxides and hydroxides such as antimony trioxide, antimony tetraoxide, antimony pentoxide, antimony halides aluminium hydroxide, magnesium hydroxide and tin dioxide. The amount of the flame retardant assistant is 0 to 15 wt. %, preferably 1 to 10 wt. %, based on the whole composition.

When a flame retardant class of Vo according to UL Standards 94 is required of the composition which is to be used for a specific purpose, it is preferred to use the flame retardant in combination with asbestos or a fluororesin such as polytetrafluoroethylene.

The inorganic fillers (C) used in the present invention are known ones usually added to the thermoplastic polyesters for the purpose of improving mechanical and physical properties such as strength, rigidity and hardness as well as thermal resistance, resistance to deformation and electrical properties. They may be in a fibrous, platy, powdery or granular form, which is selected depending on the purpose.

The fibrous fillers include inorganic fibrous materials such as glass fibers, carbon fibers, silica fibers, silica/alumina fibers, zirconia fibers, boron nitride fibers, silicon nitride fibers, boron fibers, potassium titanate fibers and fibers of metals such as stainless steel, aluminium, titanium, copper and brass. Among them, typical fibrous fillers are glass fibers and carbon fibers. Further high-melting organic fibrous materials such as polyamides, fluororesin and acrylic resin are also usable.

The powdery or granular fillers include carbon black; silicates such as silica, quartz powder, glass beads, glass powder, calcium silicate, aluminium silicate, kaolin, talc, clay, diatomaceous earth and wollastonite; metal oxides such as iron oxides, titanium oxides, zinc oxides and alumina; metal carbonates such as calcium carbonate and magnesium carbonate; metal sulfates such as calcium sulfate and barium sulfate; silicon carbide; silicon nitride; boron nitride; and various metal powders.

The platy fillers include, for example, mica, glass flakes and various metal foils.

The effect of the present invention can be obtained with any of the above-described inorganic fillers (C). Among them, the powdery and platy fillers, particularly those mainly comprising talc, clay, glass beads, glass powder or glass flakes, are effective in inhibiting the reduction in the impact resistance and tenacity.

The inorganic fillers can be used either singly or in combination of two or more of them.

In using these fillers, it is preferred to use, if necessary, a binder or a surface-treating agent. The binders and the surface-treating agents include, for example, functional compounds such as epoxy compounds, isocyanate compounds, silane compounds and titanate compounds. The fillers are previously surface-treated or treated with the binder or, alternatively, the binder or the surface-treating agent is added in the step of preparing the material.

The amount of the inorganic filler in the present invention is 5 to 60 wt. %, preferably 10 to 50 wt. %, based on the whole composition. When the amount of the inorganic filler exceeds 60 wt. %, the molding process becomes difficult and the mechanical strengths of the molding are unsatisfactory. The amount of the functional surface-treating agent used together with the inorganic filler is 0 to 10 wt. %, preferably 0.05 to 5 wt %, based on the inorganic filler.

Although it is effective in obtaining a flame-retardant thermoplastic polyester resin having excellent mechanical and electrical properties to incorporate the above-described flame retardants, if necessary, in combination with the flame retardant assistants therein, the composition thus produced has a problem that the impact resistance and tenacity (such as tensile elongation) thereof are reduced as described above.

On the contrary, when the specified phosphoric ester (D) is incorporated in the composition according to the present invention, the impact resistance, etc. can be remarkably improved without impairing physical properties, particularly electrical properties, and also without posing problems of the thermal stability and fluidity in the molding process.

The phosphoric esters (D) used for this purpose are represented by the following formula (1):

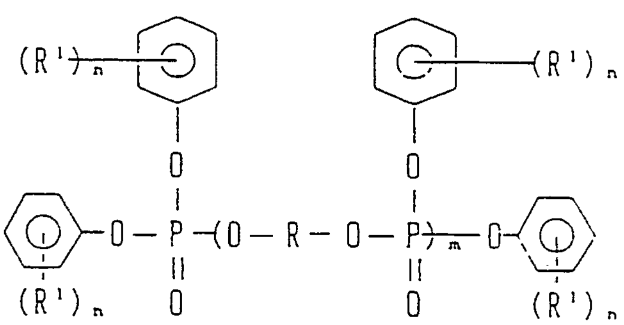

... (1)

wherein R represents a divalent organic group, $R^1$ represents the same or different groups selected from $C_1$ to $C_{20}$ aliphatic groups, $C_3$ to $C_{13}$ alicyclic groups and $C_6$ to $C_{18}$ aromatic groups, $\underline{m}$ represents a number of 1 to 30 and $\underline{n}$ represents an integer of 0 to 3.

Any of the phosphoric esters of the formula (1) can be used as the effective component (D). R in the formula (1) is a divalent organic group selected from among $C_1$ to $C_{20}$ aliphatic groups, $C_3$ to $C_{13}$ alicyclic groups and $C_6$ to $C_{18}$ aromatic groups. Among them, the aromatic groups are particularly preferred from the viewpoint of the thermal resistance necessitated in the extrusion or molding step. Among the aromatic groups, particularly effective are, for example, the following ones:

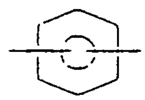 , 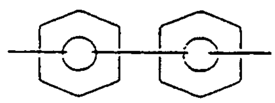

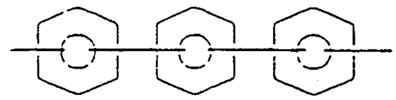 , 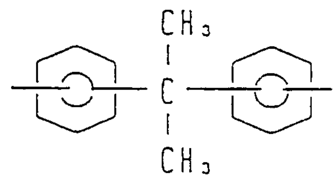

From the view point of the cost of the starting material, R is preferably

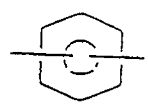 or 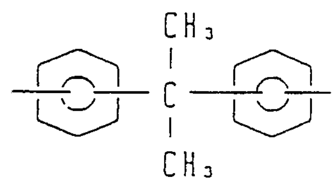 .

$R^1$ groups may be the same or different from one another and they each represent a $C_1$ to $C_{20}$ aliphatic group, a $C_3$ to $C_{13}$ alicyclic group or a $C_6$ to $C_{18}$ aromatic group. Further even the phosphoric esters having no substituent, i.e. those of the formula (1) wherein n is 0, exhibit the effect of improving the impact resistance, etc. and have a sufficient heat resistance.

$R^1$ is preferably a methyl or isopropyl group. Particularly a methyl group is most preferred, since it brings about a well-balanced effect of improving the impact resistance, etc., thermal resistance, difficulty of blooming and the cost of the starting materials. The integer n is preferably 0 to 2 and particularly 0 or 1 is preferred from the viewpoint of the difficulty of the blooming and the thermal resistance. m is at most 30 and is preferably at most 20.

The amount of the phosphoric ester (D) of the above formula (1) used in the present invention is 0.5 to 20 wt. %, preferably 1 to 10 wt. %, based on the total composition.

When the amount of the phosphoric ester (D) is insufficient, no intended effect can be obtained and, on the contrary, when it is in excess, the mechanical and physical properties of the product are seriously impaired.

The polyester resin of the present invention may contain a small amount of other thermoplastic resins so far as the object of the present invention is not damaged. They include, for example, polyamide, polycarbonate, ABS, polyphenylene oxide, polyphenylene sulfide, polyalkyl acrylate, polyacetal, polysulfone, polyether sulfone, polyetherimide, polyether ketone, phenoxy resin and fluororesin. These thermoplastic resins can be used either singly or in the form of a mixture of two or more of them.

The composition of the present invention may contain, as a matter of course, known additives in order to impart desired characteristics thereto depending on the purpose. The additives include, for example, a lubricant, nucleating agent, releasing agent, antistatic agent, another surfactant, colorant, thermal stabilizer and U.V. stabilizer.

The composition of the present invention can be easily produced by a process and in an apparatus usually employed or used for the production of resin compositions. For example, the composition can be produced by (i) a process wherein the components are mixed together, the mixture is kneaded and extruded to form pellets with an extruder and the pellets are molded, (ii) a process wherein pellets having different compositions (master batch) are produced, predetermined amounts of the pellets are mixed together and the mixture is molded to obtain moldings having an intended composition, and (iii) a process wherein one or more of the respective components are directly placed in a molding machine. It is preferred for producing a homogeneous mixture that part of the resin components are finely pulverized and then mixed with the other components.

The composition of the present invention produced by incorporating the specified phosphoric ester (D) in the thermoplastic polyester resin (A) containing the organic halogenated flame retardant (B) and the inorganic filler (C) is worth notice, represents a considerable advance in overcoming the defects, i.e. reduction in the mechanical properties, particularly the tenacity (tensile elongation) hitherto resulting from the presence of the flame retardant and the inorganic filler.

Particularly when talc is used as the filler, the excellent electrical properties, particularly tracking resistance, can be maintained and reduction in the tenacity can be inhibited. The composition is free from reduction in flame retardancy, phase separation in the melting process, thermal stability or fluidity. It is used particularly preferred as a material for electric components (such as connectors or timer cases) having improved tenacity.

[Examples]

The following Examples will further illustrate the present invention. The properties were evaluated by the following methods:

1) Methods of determining the physical properties:

Tensile test: ASTM D-638

Impact strength ASTM D-256

2) Tracking resistance:

The voltage (V) capable of being applied to the test pieces until tracking was observed was determined with a 0.1% aqueous $NH_4Cl$ solution and platinum electrodes by the IEC method and the results were represented in terms of the comparative tracking index (CTI).

Examples 1 to 10 and Comparative Examples 1 to 7

A halogenated flame retardant, flame retardant assistant, talc and/or glass fibers and phosphoric ester shown in Table 1 were added in amounts shown in Table 1 to polybutylene terephthalate having an intrinsic viscosity of 1.0 and the mixture was pelletized with an extruder to obtain a composition in the form of the pellets.

Then the pellets were molded into test pieces by injection molding and the mechanical properties and tracking resistance of them were examined. The results are shown in Table 1. The tensile strength results are given in $kg/cm^2$ ($1\ kg/cm^2 = 0.0981$ MPa).

For comparison, pellets free from the phosphoric ester were produced and tested in the same manner as above.

Examples 11 to 13 and Comparative Examples 8 to 10

A halogenated flame retardant, flame retardant assistant, inorganic filler and phosphoric ester were added to polybutylene terephthalate having an intrinsic viscosity of 0.8 in amounts shown in Table 2. The mechanical properties of the products were examined in the same manner as that of Example 1. The results are shown in Table 2.

For comparison, pellets free from the phosphoric ester were produced and tested in the same manner as above.

The phosphoric esters D-1, D-2 and D-3 are shown below.

D-1: 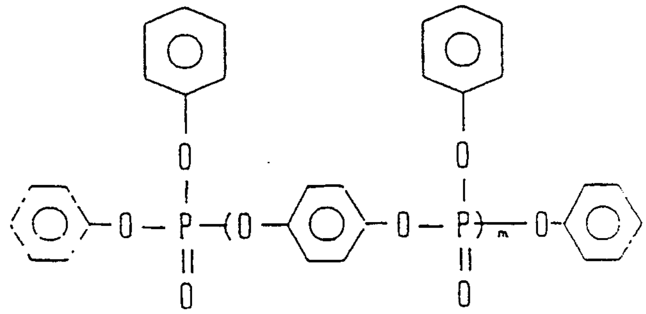

D-2: 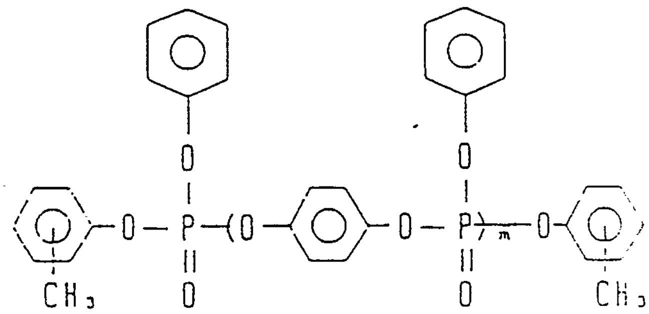

D-3: 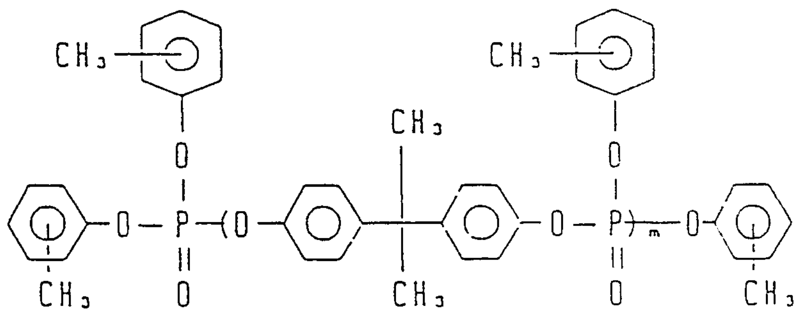

Table 1

| | | Unit | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|---|---|---|---|---|---|
| Composition | (A) Polybutylene terephthalate | wt. % | 58.5 | 60.5 | 58.5 | 58.5 | 45.5 | 48.5 | 58.5 | 57.5 | 47.5 | 60.5 | 62.5 | 49.5 | 52.5 | 62.5 | 61.5 | 51.5 | 64.5 |
| | (B) Ethylenebistetrabromo-phthalimide | 〃 | 9.0 | 9.0 | 9.0 | 9.0 | 7.0 | 9.0 | 9.0 | | | | 9.0 | 7.0 | 9.0 | 9.0 | | | |
| | (B) Brominated epoxy-modified resin | 〃 | | | | | | | | 12.0 | 12.0 | | | | | | 12.0 | 12.0 | |
| | (B) Decabromodiphenyl ether | 〃 | | | | | | | | | | 8.0 | | | | | | | 8.0 |
| | Antimony trioxide | 〃 | 8.0 | 8.0 | 8.0 | 8.0 | 3.0 | 8.0 | 8.0 | 6.0 | 6.0 | 7.0 | 8.0 | 3.0 | 8.0 | 8.0 | 6.0 | 6.0 | 7.0 |
| | Polytetrafluoroethylene | 〃 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | (C) Talc | 〃 | 20 | 20 | 20 | 20 | 40 | 20 | | 20 | 20 | 20 | 20 | 40 | 20 | | 20 | 20 | 20 |
| | (C) Glass fibers | 〃 | | | | | | 10 | 20 | | 10 | | | | 10 | 20 | | 10 | |
| | (D) Phosphoric ester D-1 | 〃 | 4 | | | | | | | | | | | | | | | | |
| | D-2 | 〃 | | 2 | 4 | | 4 | 4 | 4 | 4 | 4 | 4 | | | | | | | |
| | D-3 | 〃 | | | | 4 | | | | | | | | | | | | | |
| Physical properties | Tensile strength | kg/cm² | 495 | 525 | 485 | 481 | 420 | 865 | 1060 | 480 | 845 | 470 | 535 | 450 | 950 | 1180 | 520 | 930 | 525 |
| | Tensile elongation | % | 4.1 | 3.1 | 4.7 | 4.6 | 3.2 | 4.6 | 4.5 | 4.0 | 3.9 | 3.5 | 1.6 | 1.2 | 1.7 | 3.0 | 2.0 | 1.9 | 1.9 |
| | Izod impact strength (with notch) | kg · cm/cm (kg. mm/mm) | 3.6 | 3.4 | 4.0 | 3.9 | 3.5 | 4.6 | 7.0 | 3.9 | 4.7 | 3.4 | 2.8 | 2.6 | 3.4 | 6.2 | 3.0 | 3.0 | 2.9 |
| | Tracking resistance (CTI) | V | 400 | 400 | 425 | 400 | 575 | 375 | 250 | 425 | 375 | 375 | 400 | 550 | 350 | 225 | 400 | 350 | 400 |

Table 2

| | | Unit | Example | | | Comparative Example | | |
|---|---|---|---|---|---|---|---|---|
| | | | 11 | 12 | 13 | 8 | 9 | 10 |
| Composition | (A) Polybutylene terephthalate | wt. % | 48.5 | 48.5 | 48.6 | 52.5 | 52.5 | 52.5 |
| | (B) Ethylenebistetrabromophthalimide | wt. % | 9.0 | 9.0 | 9.0 | 9.0 | 9.0 | 9.0 |
| | Antimony trioxide | wt. % | 8.0 | 8.0 | 8.0 | 8.0 | 8.0 | 8.0 |
| | Polytetrafluoroethylene | wt. % | 0.5 | 0.5 | 0.5 | 0.5 | 0.5 | 0.5 |
| | (C) Glass beads | wt. % | 30 | | | 30 | | |
| | (C) Glass flakes | wt. % | | 30 | 15 | | 30 | 15 |
| | (C) Glass fibers | wt. % | | | 15 | | | 15 |
| | (D) Phosphoric ester D-2 | wt. % | 4.0 | 4.0 | 4.0 | | | |
| Physical properties | Tensile strength | $kg/cm^2$ | 465 | 650 | 1030 | 515 | 710 | 1110 |
| | Tensile elongation | % | 3.4 | 4.5 | 4.3 | 2.0 | 2.3 | 2.5 |
| | Izod impact strength (with notch) | kg. cm/cm (kg. mm/mm) | 3.1 | 5.0 | 6.0 | 2.3 | 3.9 | 5.0 |

## Claims

1. A flame-retardant polyester resin composition comprising:
(A) a thermoplastic polyester resin,
(B) 1 to 30 wt. % (based on the composition) of an organic halogenated flame retardant,
(C) 5 to 60 wt. % (based on the composition) of an inorganic filler, and
(D) 0.5 to 20 wt. % (based on the composition) of a phosphoric ester of the following formula (1):

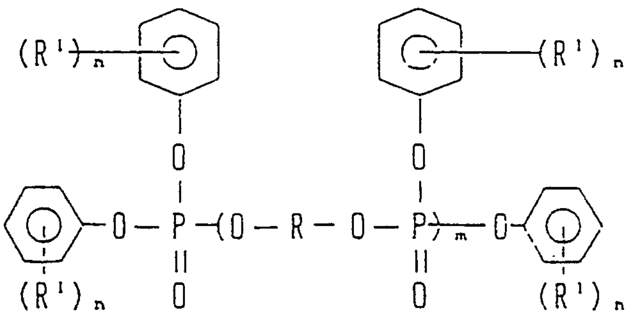

... (1)

wherein R represents a divalent organic group, $R^1$ represents the same or different groups selected from $C_1$ to $C_{20}$ aliphatic groups, $C_3$ to $C_{13}$ alicyclic groups and $C_6$ to $C_{18}$ aromatic groups, m represents a number of 1 to 30 and n represents an integer of 0 to 3.

2. A flame-retardant polyester resin composition according to claim 1, characterized in that it comprises 25 to 93.5 wt. % of the thermoplastic polyester resin (A).

3. A flame-retardant polyester resin composition according to claim 1 or claim 2, characterized in that the thermoplastic polyester resin (A) is a polybutylene terephthalate resin or a copolyester mainly comprising the same.

4. A flame-retardant polyester resin composition according to any preceding claim, characterized in that it comprises:
2 to 20 wt. % (based on the composition) of the organic halogenated flame retardant (B),
10 to 50 wt. % (based on the composition) of the inorganic filler (C), and
1 to 10 wt. % (based on the composition) of the phosphoric ester (D).

5. A flame-retardant polyester resin composition according to any preceding claim, characterized in that the flame retardant (B) is used in combination with up to 15 wt. % (based on the composition) of a flame-retardant assistant.

6. A flame-retardant polyester resin composition according to any preceding claim, characterized in that the inorganic filler (C) is at least one of talc, clay, glass beads, glass powder and glass flakes.

7. A flame-retardant polyester resin composition according to any preceding claim, characterized in that R of the formula (1) of the phosphoric ester (D) represents a divalent organic group selected from $C_1$ to $C_{20}$ aliphatic groups, $C_3$ to $C_{13}$ alicyclic groups and $C_6$ to $C_{18}$ aromatic groups.

8. A flame-retardant polyester resin composition according to claim 7, characterized in that R is selected from the following aromatic groups:

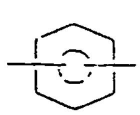 , 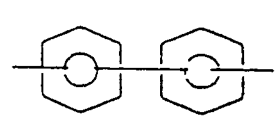

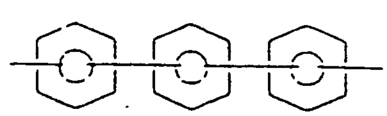 , 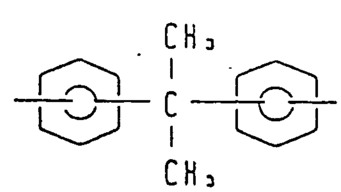

9. A flame-retardant polyester resin composition according to any preceding claim, characterized in that $R^1$ of the formula (1) of the phosphoric ester (D) represents a methyl or isopropyl group.

10. A flame-retardant polyester resin composition according to any preceding claim, characterized in that in the formula (1) of the phosphoric ester (D) m is at most 20 and n is 0 or 1.

European Patent Office

# EUROPEAN SEARCH REPORT

Application Number

EP 90 30 2030

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 133 641 (GENERAL ELECTRIC CO.)<br>* Claims 1,11,22 *<br>----- | 1 | C 08 K 13/02<br>C 08 L 67/02 //<br>(C 08 K 13/02<br>C 08 K 3:00<br>C 08 K 5:02<br>C 08 K 5:523) |
| | | | **TECHNICAL FIELDS SEARCHED (Int. Cl.5)** |
| | | | C 08 K<br>C 08 L |

The present search report has been drawn up for all claims

| Place of search | Date of completion of the search | Examiner |
|---|---|---|
| THE HAGUE | 25-04-1990 | SCHUELER D.H.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)